Europäisches Patentamt

European Patent Office

Office européen des brevets

(11) Publication number: 0 288 192
A1

# EUROPEAN PATENT APPLICATION

(21) Application number: 88303233.6

(22) Date of filing: 12.04.88

(51) Int. Cl.⁴ A01G 27/00 , A01G 9/00

(30) Priority: 13.04.87 US 37748

(43) Date of publication of application:
26.10.88 Bulletin 88/43

(84) Designated Contracting States:
CH DE ES FR GB IT LI NL

(71) Applicant: H J S ENTERPRISES, INC.
1458 Countyiine Road
Huntingdon Valley Pennsylvania 19006(US)

(72) Inventor: Scales, Donald F.
496 Bradford Road
Oreland Pennsylvania, PA19075(US)
Inventor: Lambrix, Thomas R.
600 Old Street RTE E201
Trevose Pennsylvania, PA19047(US)

(74) Representative: Shaw, Laurence
George House George Road
Edgbaston Birmingham B15 1PG(GB)

(54) Raised bed for growing plants.

(57) A raised bed (22) for growing plants is formed of an enclosure (20) comprising modules (26) interconnected at their ends by connecting means (42, 44). The modules (26) are hollow and have compartments (36), and a coupling (74) between the connecting means (42, 44) is arranged to allow water entering one compartment (36) to pass into that of its neighbouring modules (26). The inner sidewall (34) of the modules (26) includes small holes (40) by which the water can irrigate the soil (22) in the bed (20).

FIG. 1

FIG. 2

EP 0 288 192 A1

# RAISED BED FOR GROWING PLANTS

The invention relates to a bed containing soil to be raised above the local ground level and which is called herein a raised bed. Such beds have various advantages including a longer plant growing season, better environment control, less weeds and improved yields. Raised beds are used by the amateur and professional grower of vegetables, flowers etc.

It is usual to provide the raised bed with an enclosure wall of wooden beams, bricks or the like so that the bed is not easy to assemble and disassemble, and control of watering is not efficient.

In one aspect of the invention there is provided an enclosure arranged in use to contain a plant growing medium to define a raised bed for the growing of plants and comprising a plurality of wall portions characterised in that at least one wall portion is hollow to define a compartment to receive liquid and includes holes to supply the liquid from the compartment to the interior of the enclosure.

It is preferred that the holes extend from dimples formed from the inside wall of the wall portion, and that the dimples are of hemispherical shape and extend at about 15° upwardly to the plane of the wall.

Most preferably the enclosure is formed of a plurality of modular wall portions, the compartments are interlinked so that liquid introduced via an inlet in one compartment may reach at least some of the other compartments. Most preferably, the modules include releasable connecting means to releasably connect one module to its neighbour, and a fluid coupling is present in the connecting means to allow for the fluid to pass from the compartment of one module to others.

In order that the invention may be well understood it will now be described, by way of illustration only, with reference to the accompanying drawings, in which:

Figure 1 is a perspective view of a raised bed of the invention;

Figure 2 is an enlarged exploded perspective view of one module of the bed of Figure 1;

Figure 3 is an enlarged sectional view taken along lines 3-3 on Figure 2;

Figure 4 is an enlarged sectional view taken along lines 4-4 on Figure 2;

Figure 5 is an enlarged sectional view taken along lines 5-5 on Figure 2; and

Figure 6 is an enlarged sectional view taken along lines 6-6 on Figure 2.

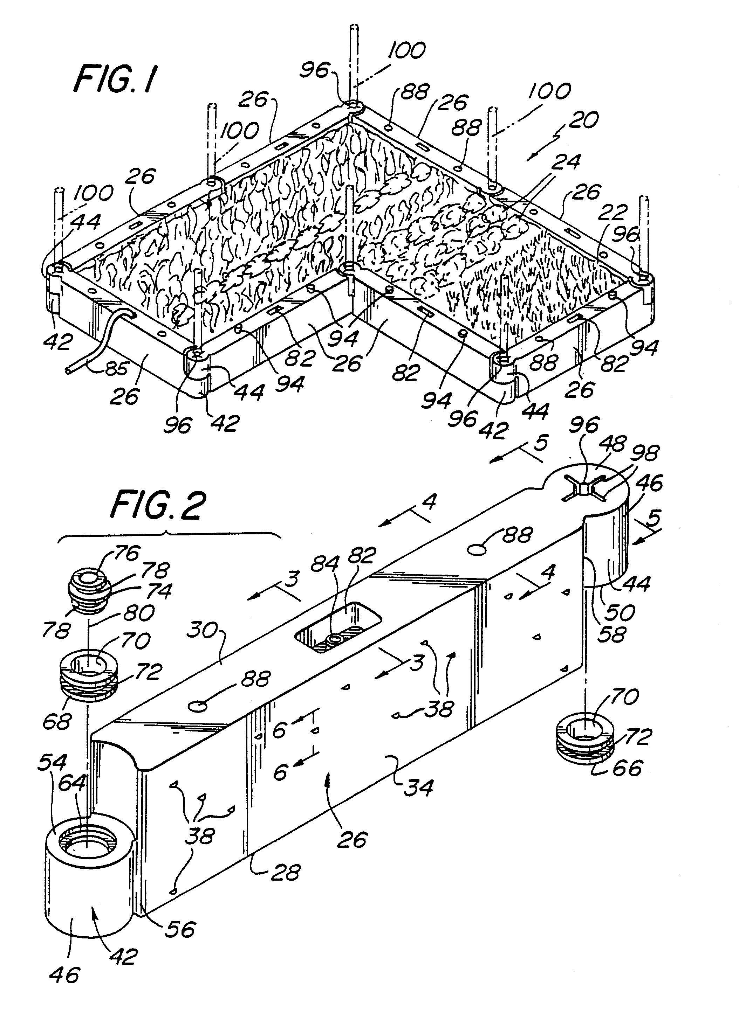

The raised bed 20 of Figures 1 to 6 contains soil, peat or the like 22 in which plants 24 may be grown. The bed 20 has an enclosure wall which comprises a plurality of interconnected elongated wall portions or modules 26. As shown in Figures 2 to 5, each module comprises an elongate body including a generally planar bottom wall 28, top wall 30, and generally planar outer side wall 32 and inner side wall 34. The body is hollow and has an interior cavity or compartment 36.

Dimples 38 are present on the inner side wall 34. As best shown in Figures 2 and 6, the dimples 38 are of a hemispherical shape, with the plane of the dimple extending upwardly at an angle of approximately 15 degrees to the plane of the parent side wall 34. The dimples 38 have a small diameter hole 40 extending through the wall 34 through which water or other liquid can pass from the hollow compartment 36, to irrigate the soil 22 within the bed 20 by seeping or at a trickle rate.

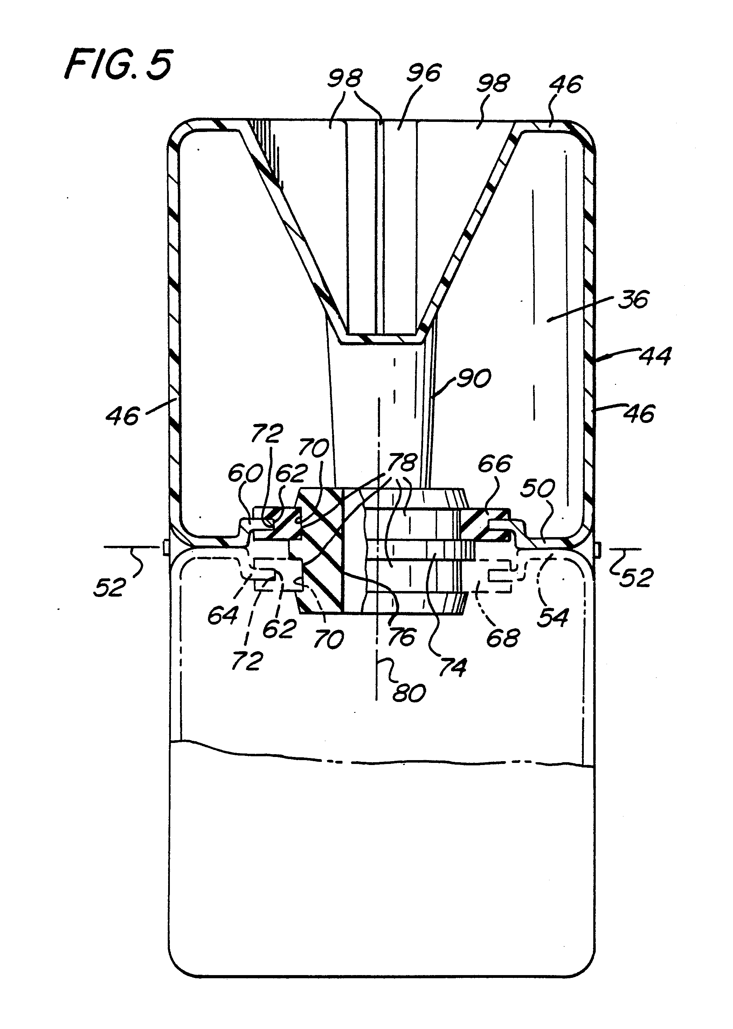

The ends of the modules 26 include extensions as connector portions 42, 44. The connectors 42, 44 are of a height equal to half that of the module 26 and the upper connector 44 includes a top wall 48 which is flat, flush and contiguous with the top wall 30 and the lower connector 42 includes a bottom wall (not shown) which is flat, flush and contiguous with the bottom wall 28. The upper connector 44 includes a bottom wall 50 (Figure 5) which is disposed at the vertical midline 52 (Figure 5) of the module 26, while the lower connector 42 includes a top wall 54 which is disposed at the midline 52. The modules 26 are thus hermaphroditic and as will be explained below, when adjacent modules are joined end to end the upper connector of one module is releasably and pivotally connected to the lower connector of the other.

As shown in Figure 5, the bottom wall 50 of the upper connector 44 includes a circular recessed portion 60 having a hole 62 and a recess 64 also having a hole 62 is present in the top wall 54 of the bottom connector 42. A pair of grommets 66, 68 formed of resilient material such as rubber interconnect connectors 42 and 44 of adjacent modules 26. As shown in Figures 2 and 5, each grommet has a central passageway 70. Each grommet has an annular peripheral recess 72 to receive the wall 60 of the respective hole 62. A short rigid hollow coupling 74 extends through the aligned passageways 70 in the grommets. The coupling 74 has a central passageway 76 and a pair of external annular recesses 78. The coupling 74 is arranged so that its upper annular recess 78 seats the grommet 66 of the upper connector 44 and the lower annular recess 78 seats the grommet 68 of the lower connector 42. The central axis 80 of the coupling 74 serves as the rotational axis about which two adjacent modules 26 can be pivoted with respect to one another to establish the desired angular orientation.

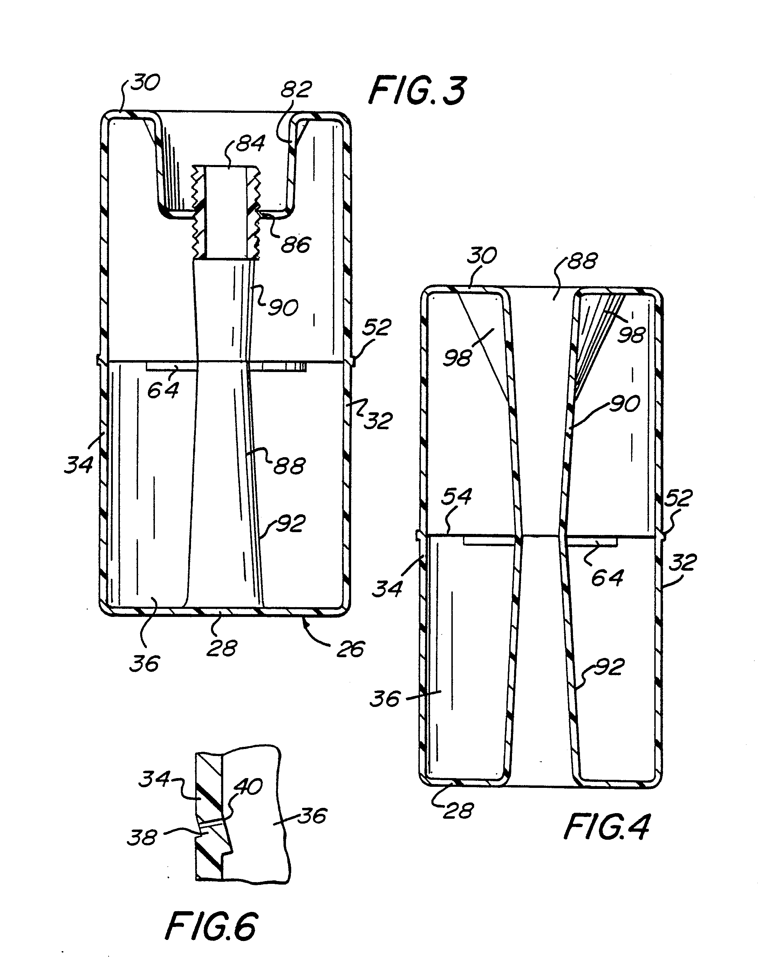

As shown in Figures 1 and 3, a generally rectangular recess 82 is present in the top wall 30 of each module 26. A threaded tubular fitting 84 is screwed into an opening 86 in the bottom wall of at least one recess 82. The threaded fitting 84 is about 2cm diameter, to be coupled to a conventional garden hose fitting (not shown) so that water can be introduced through the hose through the fitting 84 and into the compartment 36 of the module 26. The fitting 84 is located in the recess (as opposed to being in the top wall of the module 26) so that two or more modules 26 can be stacked vertically to form a multiple height bed, and without the fitting 84 interfering with the stackability of the members. Water or other liquid entering the compartment of one module 26 can pass through the coupling 74 into the compartment of the other modules 26 to fill them all. The liquid can then slowly exit by seeping or trickle flow from the small holes 40 in the inner side walls of the modules 26, so continuously and uniformly irrigating the bed 22.

As shown in Figures 1, 2 and 4, each module 26 includes a passageway 88 extending between the top wall 30 and the bottom wall 28. The passageway 88 includes an upper section 90 which tapers downward from the top wall to the midline 52 and a bottom section 92 which tapers upward from the bottom wall to the midline. The inside diameter of the passageway 88 is smallest at the midline. Each passageway 88 forms a gripping socket to receive a stake 94 (Figure 1) extending into the ground and so anchoring the module 26.

As shown in Figures 1, 2, 4 and 5, the top wall 30 of each upper connection 44 includes a central cylindrical recess 96 having four fin-like planar radial recesses 98 to grippingly receive a pole 100 or standard of an auxiliary structure, e.g. plastic grow cover, cloche, sun shade, trellis, etc.

Each module and its connectors 42 and 44 are formed integrally by rotational moulding of a moisture impervious, corrosion resistant material, e.g. polyethylene or like plastic or other material. The midline 52 is located at the parting line of the mould (not shown).

The wall portions 56 and 58 between the parent wall and the connectors, the walls of the two connectors 42 and 44, and the walls of the module 26 are of the same thickness.

In a preferred embodiment of the invention, the modules 26 are about 91.4cm long and 20.3cm high. The walls are all about 2.3mm thick. The outside diameter of each connector is 10.1cm and the diameter of the holes 62 is about 5.1cm. The recess 96 in the top wall 30 of the upper connector 44 is approximately 1.7mm in diameter by 5.08cm deep and with the projecting fin-like recesses extending out to a maximum of 3.2cm from the centre of the recess 96. The depth of the recesses 60 and 62 are each 0.48cm deep. The rectangular recess 82 in the top wall 30 of the module 26 is approximately 10.2cm long, 5.1cm wide, and 3.8cm deep. The dimples 38 are 0.64cm in diameter. The holes 40 start at a height of approximately 1.3cm above the bottom wall to a height of approximately 16.5cm from the bottom wall.

In use, adjacent modules 26 are joined in end to end relation to form a bed of any convenient shape (as shown in Figure 1, the bed may be L shape). The modules 26 may also be built up in layers to increase the height of the bed. Stakes 94 and poles 100 may be fitted as desired. Water, or other liquid, with or without plant treating agents such as nutrients, insecticides etc. is then introduced into one compartment 36 and flows through the couplings 74 into the adjacent modules. The water seeps through the holes 40 to uniformly irrigate the bed. The bed may, if desired, be dismantled at the end of one growing season to be assembled for reuse at the start of the next.

In order to have a pleasant appearance the top and front surface of the modules 26 may be moulded to have a woodgrain finish. The self-irrigating raised bed of the invention combines the advantages of raised-bed gardening with a drip-method of uniform constant irrigation and liquids such as plant nutrients may be easily added at a controlled rate. Moreover, the modules are relatively low in cost, can be readily assembled, disassembled or reconfigured for various sizes and shape of beds. The modules are lightweight and can be readily stored or stacked when not in use, and are affordable for the home gardener.

## Claims

1. An enclosure (20) arranged in use to contain a plant growing medium (22) to define a raised bed (22) for the growing of plants and comprising a plurality of wall portions (26) characterised in that at least one wall portion (26) is hollow to define a compartment (36) to receive liquid and includes holes (40) to supply the liquid from the compartment (36) to the interior of the enclosure (20).

2. An enclosure according to Claim 1 characterised in that the holes (40) extend from dimples (38) formed in the inner side wall (34) of the wall portion (26).

3. An enclosure according to Claim 2 characterised in that the dimples (38) are of hemispherical shape and extend at about 15° upwardly to the plane of the wall (34).

4. An enclosure according to any preceding Claim characterised in that the enclosure (20) is formed of modular wall portions (26) the compartments (36) of which are interlinked (74) so that liquid introduced via an inlet (84) in one compartment (36) may reach at least some of the other compartments (36).

5. An enclosure according to Claim 4 characterised in that the modules (26) include releasable connecting means (42, 44) to releasably connect each module (26) to its neighbour.

6. An enclosure according to Claim 4 or 5 characterised in that the releasable connecting means (42, 44) includes the coupling (74) adapted to provide communication between the compartments (36) of the neighbouring modules (26).

7. An enclosure according to Claim 6 characterised in that each module (26) includes a lower connecting means (42) at one end and an upper connecting means (44) at the other end, the connecting means (42, 44) being alignable vertically, each connecting means being in fluid communication with the compartment (36), and the coupling (74) includes a fluid passageway (70) whereby when adjacent modules (26) are interconnected liquid may flow from the compartment (36) of one module (26) through the lower connecting means (42) thereof up through the coupling (74) into the upper connecting means (44) of the adjacent module (26) and into the compartment (36) of that module (26).

8. An enclosure according to any of Claims 4 to 7 characterised in that the inlet (84) for the supply of liquid to the compartment (36) of one module (26) comprises a hose connector (84) located in a recess (82) within the top wall (30) of the module (26) arranged such that the hose connector does not extend above the top wall (30) so that modules (26) may be superimposed one on top of the other.

9. An enclosure according to an preceding Claim characterised in that at least one of the wall portions (26) includes an opening (88) extending between the top (30) and bottom (28) walls to receive a stake (94) whereby the wall portion (26) may be staked to the ground.

10. An enclosure according to any preceding Claim characterised in that each of the wall portions (26) has been rotationally moulded of a plastics.

FIG.1

FIG.2

*FIG.3*

*FIG.4*

*FIG.6*

**FIG.5**

European Patent
Office

EUROPEAN SEARCH REPORT

Application Number

EP 88 30 3233

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 527 176 (JOAS)<br>* Page 1, left-hand column, last paragraph - page 2, left-hand column, paragraph 6; figure *<br>--- | 1 | A 01 G 27/00<br>A 01 G 9/00 |
| Y | DE-A-3 331 640 (HERING)<br>* Page 7, last paragraph; figures 1-7 *<br>--- | 1 | |
| Y | FR-A-2 289 109 (RAT)<br>* Page 7, line 36 - page 8, line 7; figures 17 *<br>--- | 1 | |
| A | US-A-3 916 565 (RUNYON)<br>* Column 4, line 53 - column 6, line 52; column 7, lines 7-19; figures 6-11,15 *<br>--- | 1,4 | |
| A | FR-A-2 191 835 (SCHOCK)<br>* Page 4, line 16 - page 5, line 36; figures 1,2 *<br>----- | 1 | |

TECHNICAL FIELDS
SEARCHED (Int. Cl.4)

A 01 G

The present search report has been drawn up for all claims

| Place of search | Date of completion of the search | Examiner |
|---|---|---|
| THE HAGUE | 16-06-1988 | HERYGERS J.J. |